**Europäisches Patentamt**

(19) **European Patent Office**

**Office européen des brevets**

(11) Numéro de publication: **0 092 840**
**B1**

(12) **FASCICULE DE BREVET EUROPEEN**

(45) Date de publication du fascicule du brevet:
24.06.87

(51) Int. Cl.⁴: **B 01 D 39/20**, B 01 D 13/04

(21) Numéro de dépôt: 83104066.2

(22) Date de dépôt: 26.04.83

(54) Membrane de filtration, et procédé de préparation d'une telle membrane.

(30) Priorité: 28.04.82 FR 8207298

(43) Date de publication de la demande:
02.11.83 Bulletin 83/44

(45) Mention de la délivrance du brevet:
24.06.87 Bulletin 87/26

(84) Etats contractants désignés:
BE CH DE FR GB IT LI NL SE

(56) Documents cités:
DE - B - 1 072 543
FR - A - 1 214 130
FR - A - 2 150 390
FR - A - 2 463 636
GB - A - 556 678
US - A - 3 359 622

Chemische Technologie - Winnacker und Küchler, Band
7, 1975, pages 87,88,113
Encyclopedia of Chemical Technology, vol. 19, p.
506-581, vol. 1, p. 222,223

(73) Titulaire: **CERAVER Société anonyme dite:, 12, rue de la Baume, F-75008 Paris (FR)**

(72) Inventeur: **Gillot, Jacques, 5, Impasse de la Hount ODOS, F-65310 Laloubere (FR)**

(74) Mandataire: **Weinmiller, Jürgen et al, Lennéstrasse 9 Postfach 24, D-8133 Feldafing (DE)**

**Description**

La présente invention concerne une membrane de filtration formée d'une matière minérale frittée comprenant au moins une couche de surface à pores fins servant de couche filtrante et constituée de grains solidarisés entre eux. L'invention concerne en outre un procédé de préparation d'une telle membrane.

Dans le document FR-A 2 150 390, on décrit un procédé de ce type pour la préparation de membranes en alumine poreuse frittée. La membrane est déposée en couche microporeuse sur un support par filtration d'une suspension aqueuse et sous une différence de pression adéquate. La suspension contient des particules submicroniques d'alumine et/ou d'hydrates d'aluminium et au moins un éther hydrophile de la cellulose. Après séchage, on calcine la couche et on la soumet à un compactage avant de la fritter. Une telle membrane a une surface qui présente, le plus souvent, à l'échelle microscopique, des irrégularités, dépressions et saillies, qui entraînent les inconvénients suivants:

– En mode de filtration directe, l'interface entre la membrane et le gâteau de filtration a une forme irrégulière et il est donc plus difficile de nettoyer la surface du filtre pour le décolmater.

– En filtration tangentielle, l'écoulement tangentiel, dont le rôle est d'empêcher la formation d'un gâteau en entraînant les particules arrêtées à l'entrée d'un pore, ne peut pas chasser les particules arrêtées aux entrées de pores situées dans les dépressions. Par ailleurs, des particules entraînées tangentiellement butent sur les sailllies de la surface, s'y arrêtent et il se constitue en amont de ces saillies des amas de particules qui sont le début de la formation d'un gâteau.

Les dépressions et les saillies de la surface de la membrane abaissent donc la perméabilité globale du filtre et rendent nécessaires ou plus fréquentes les opérations de décolmatage, ce qui constitue une gêne dans l'exploitation du filtre.

La présente invention permet notamment de remédier à ces inconvénients.

Elle a pour but de procurer une membrane de filtration qui ne se colmate que très lentement, qui puisse se décolmater facilement et rapidement, par exemple par mise sous une pression inverse, et qui permette la filtration ou l'ultrafiltration de liquides ou de gaz, même très chauds ou corrosifs.

Ce but est atteint selon l'invention par la membrane telle qu'elle est définie par la revendication 1.

Avantageusement la rugosité moyenne est inférieure à 0,10 fois la dimension moyenne des grains.

Selon un mode d'exécution de l'invention, 90% en poids au moins des grains de cette couche superficielle ont une grosseur inférieure à 2 fois la grosseur moyenne, et 90% en poids au moins d'entre eux une grosseur supérieure à la moitié de la grosseur moyenne.

La porosité de la couche de filtration peut être comprise entre 30 et 40% en volume.

La couche filtrante peut être déposée sur une couche support présentant une porosité plus importante et qui peut être constituée de plusieurs sous-couches de porosités différentes.

En ce qui concerne le procédé de fabrication d'une telle membrane, référence est faite à la revendication 9.

La couche de filtration, ainsi que la couche support, avantageusement de même nature, peuvent être constituées par au moins un matériau choisi dans le groupe comprenant les oxydes métalliques, le carbure de silicium, le nitrure de silicium, les oxynitrures de silicium et d'aluminium (Si-AION), les borures et les verres.

Le matériau peut ainsi être de l'alumine de pureté au moins égale à 99,9%.

Eventuellement la mise en contact de la barbotine avec la couche support peut être suivie d'une filtration de la barbotine au travers de ladite couche support.

On peut avantageusement ajouter dans la barbotine une matière organique épaississante ne s'opposant pas à sa défloculation.

Par ailleurs, avant la mise en contact avec la couche support, la barbotine peut être soumise à un broyage prolongé ayant pour but notamment de rompre les agglomérats formés de plusieurs grains et d'assurer une bonne dispersion des grains dans la suspension.

Il est utile de mesurer la rugosité sur une longueur égale à au moins 5 fois la dimension moyenne des grains.

En effet, une mesure faite sur une longueur plus petite ne serait pas statistiquement significative, du fait du trop petit nombre de grains alors considéré.

Par contre, il n'est pas utile de mesurer cette rugosité sur une trop grande longueur; en effet, dans ce cas, la rugosité mesurée engloberait non seulement les aspérités et les dépressions locales dues à des irrégularités dans la position des grains les uns par rapport aux autres, qui sont néfastes à une bonne filtration, mais aussi les ondulations à faible pente de la surface qui n'ont pas d'effet néfaste sur la filtration.

C'est pourquoi une distance de mesure comprise entre 5 à 15 fois la dimension moyenne des grains donne une valeur satisfaisante de la rugosité.

La dimension d'un grain est définie comme le diamètre moyen d'une sphère de même densité que le grain qui, placée dans un liquide, y sédimente à la même vitesse que le grain considéré. C'est la définition qui est utilisée dans les appareils bien connus de mesure de dimension de particules, par la méthode de sédimentation, méthode qui a été utilisée pour caractériser les grains cités dans les exemples.

On appellera dimension moyenne d'un ensemble de grains, désignée dans ce qui suit par $D_{50}$, la dimension de grain telle que 50% en poids des grains de cet ensemble ont une dimension supé-

rieure à $D_{50}$, et 50% en poids une dimension inférieure à $D_{50}$.

La rugosité moyenne de la surface de la membrane est définie comme suit:

Un axe Ox étant pris parallèle à la surface moyenne de la membrane (du côté du fluide à filtrer) et un axe Oy perpendiculaire à celle-ci, en définissant par y = f(x) la hauteur de la surface au-dessus ou au-dessous de la surface moyenne, on définit le long d'une longueur L une hauteur moyenne h telle que:

$$h = \frac{1}{L} \int_0^L f(x) \cdot dx$$

la rugosité moyenne est alors

$$R_a = \frac{1}{L} \int_0^L \left| f(x) - h \right| dx$$

Dans une mesure de rugosité effectuée au moyen d'un rugosimètre, on filtre le signal du capteur en ne gardant que les hautes fréquences qui correspondent aux variations de hauteur à courte distance. Le paramètre de coupure ainsi obtenu appelé «cut-off» correspond à la longueur (en microns) le long de la surface sur laquelle se fait l'intégration. En prenant un «cut-off» petit, supérieur à 5 fois la dimension moyenne des grains et inférieur à environ 15 fois celle-ci, on ne mesure que les variations de hauteur de grain à grain, ou de quelques grains à quelques grains. Si l'on prend un «cut-off» grand, on mesure à la fois les variations de hauteur de grain à grain et celles correspondant aux ondulations de la surface.

En mesurant la rugosité avec un «cut-off» supérieur à 5 fois la dimension moyenne des grains, la rugosité moyenne $R_a$ de la couche filtrante de la membrane selon l'invention est telle que

$R_a < 0,20\ D_{50}$

et de préférence:

$R_a < 0,10\ D_{50}$

Pour la couche de filtration, dans le cas où elle est distincte de la couche support, le diamètre des pores peut être compris entre 0,01 micron et 20 microns, la dimension moyenne des grains étant comprise entre 0,02 micron et 50 microns.

Pour la couche support, le diamètre des pores peut être compris entre 2 et 50 microns, la dimension moyenne des grains étant comprise entre 5 et 200 microns.

Il est décrit ci-après, à titre d'exemple, des membranes de filtration selon l'invention, et leurs procédés de préparation, ainsi qu'à titre de comparaison des membranes à surface rugueuse.

A titre d'exemple une membrane selon l'invention peut être constituée:

– d'une couche support comprenant une première sous-couche de 1,5 à 2 mm d'épaisseur et dont les pores présentent une dimension moyenne de 10 à 20 microns, et une deuxième sous-couche d'épaisseur voisine de 20 microns et dont la dimension moyenne des pores est de 1 à 3 microns.

Cette couche support peut se présenter sous la forme d'un tube présentant un diamètre intérieur de 7 ou 15 mm par exemple,

– d'une couche de filtration d'épaisseur comprise entre 10 et 20 microns, la dimension moyenne des pores étant de 0,2 à 0,8 micron.

De préférence, la porosité des différentes couches est comprise entre 30 et 40% en volume.

Cette membrane est de préférence en une matière minérale frittée, comme indiqué ci-dessus, mais elle peut être aussi en carbone préparé par cuisson de grains de carbone agglomérés par un liant organique.

Elle est généralement sous forme d'un faisceau de tubes, la couche à porosité la plus fine étant sur leur surface intérieure, mais elle peut également être plane.

La préparation de membranes à partir de grains d'un oxyde métallique s'effectue en préparant une barbotine très bien défloculée de particules de l'oxyde, dont la distribution des diamètres est très resserrée. La grosseur moyenne des particules mesurée par sédimentation étant désignée par $D_{50}$, 90%, en poids, au moins des particules sont de grosseur inférieure à $2\ D_{50}$, et 90% en poids au moins des particules de grosseur supérieure à $\frac{1}{2}$ $D_{50}$. Pour préparer cette barbotine, on peut utiliser tout tensio-actif provoquant un très bon état de défloculation, c'est-à-dire un état de dispersion où chaque particule en suspension est isolée des autres particules, c'est-à-dire qu'il n'y a pas dans la suspension d'agglomérats de plusieurs particules entre elles ou qu'il n'y en a que très peu. La suspension doit avoir une viscosité suffisante pour éviter une sédimentation rapide des particules. On l'additionne à cet effet d'un agent épaississant qui ne soit pas défavorable à la défloculation de la barbotine. Celle-ci doit en effet sédimenter en donnant un sédiment dense formé d'un empilement compact de particules. Une fraction importante en volume (au moins 40%) est constituée par les particules, le complément à 100% étant formé par le volume de liquide entre les particules. On choisira donc un agent épaississant qui permette, en conjonction avec l'agent tensio-actif, d'obtenir un sédiment dense, dont au moins 40% soit constitué par les particules. Les agents épaississants qui ne permettraient pas d'y parvenir sont à écarter.

On met en contact la barbotine et la surface de la membrane qui doit recevoir la couche à surface lisse de façon à laisser sur cette surface un film uniforme de cette barbotine.

On sèche et on cuit pour fritter les particules ainsi déposées de manière à les souder entre elles et de façon que la couche qu'elles forment soit également soudée sur la couche sur laquelle elle a été déposée.

On peut aussi déposer la couche à surface lisse non pas par simple mise en contact de la surface de la membrane avec la barbotine défloculée, mais par filtration de cette barbotine à travers la membrane de façon à ce que le liquide traverse la membrane, les particules en suspension étant retenues par la première couche poreuse de la membrane qu'elles ne peuvent pas traverser.

On donne ci-après des exemples de préparation de membranes selon l'invention.

Exemple 1

On prépare une membrane tubulaire bicouche par le procédé décrit dans la demande de brevet FR-A-2 463 636. On obtient ainsi des tubes comprenant une couche support d'épaisseur 1,5 mm et de diamètre moyen de pores 15 microns et une couche d'épaisseur 20 à 30 microns d'un diamètre moyen de pores de 1 micron située sur la face intérieure du tube.

Pour déposer cette deuxième couche une troisième couche à diamètre moyen de pores 0,26 microns et à faible rugosité, on procède comme suit: on prépare une barbotine ayant la composition suivante:
– alumine d'un diamètre moyen de grains 0,55 micron (mesuré après broyage de la barbotine): 8% en masse
– eau additionnée de polyéthylène glycol («Carbowax 4000C» de UNION CARBIDE) jusqu'à obtenir une viscosité de 5 poises: 91,84%
– tensioactif «DARVAN C» de la firme POLYPLASTIC: 0,16%.

On soumet cette barbotine à un broyage de 24 heures dans un broyeur à billes d'une contenance de 25 litres chargé de:
– 25 kg de billes d'alumine d'un diamètre de 10 mm
– 7 litres de barbotine
cette opération ayant pour but essentiel de rompre les agglomérats de grains et de bien disperser les particules.

On remplit de cette barbotine le tube préparé précédemment, puis on le vide par gravité. Il reste sur la surface intérieure du tube un film de barbotine qu'on sèche et qu'on soumet à une cuisson oxydante à 1300°C, ce qui forme une couche d'épaisseur 20 à 30 microns ayant un diamètre moyen de pores de 0,26 micron et une rugosité faible qui sera définie dans le tableau comparatif ci-après.

A titre de comparaison, on a préparé également des membranes selon le même mode opératoire, mais en remplaçant dans la barbotine le polyéthylène glycol («Carbowax 4000») par de l'éthylhydroxyéthylcellulose («Bermocoll») et en n'y introduisant pas de produit tensioactif. On obtient des membranes à surface rugueuse ne convenant pas pour le but recherché, comme on le verra également dans le tableau comparatif ci-après.

Exemple 2

On prépare une membrane tubulaire monocouche par le procédé décrit dans la demande de brevet FR-A-2 463 636 en s'arrêtant au stade du tube-support d'une épaisseur de 2 mm et d'un diamètre moyen de pores de 15 microns.

Pour déposer sur la surface intérieure de ce tube une couche à diamètre moyen de pores 1,9 micron et à faible rugosité,
– on prépare une barbotine ayant la même composition que celle de l'exemple 1, mais avec une alumine d'un diamètre moyen de grains de 1,2 micron après broyage et on la soumet à un broyage comme dans l'exemple 1
– on remplit le tube de cette barbotine, puis on le vide par gravité. Il reste sur sa surface intérieure un film de barbotine qu'on sèche et qu'on soumet à une cuisson oxydante à 1500°C environ, ce qui forme une couche d'épaisseur 20 à 30 microns ayant un diamètre moyen de pores de 1,8 micron et une rugosité faible (voir tableau ci-dessous).

A titre de comparaison, on a préparé aussi des membranes selon le même mode opératoire, en remplaçant dans la barbotine le polyéthylène glycol par de l'éthylhydroxyéthylcellulose et en n'y introduisant pas de produit tensioactif. On obtient des membranes à surface rugueuse (tableau ci-dessous) ne convenant pas pour le but recherché.

Exemple 3

Le produit de départ était constitué par une alumine dont la dimension moyenne des grains

| $D_{50}$ (micron) | Dimension moyenne des pores (micron) | Cut-off (micron) | Rugosité Ra (micron) | $\dfrac{R_a}{D_{50}}$ | $\dfrac{\text{Cut-off}^*}{D_{50}}$ | |
|---|---|---|---|---|---|---|
| Exemple 1 | | | | | | |
| a/0,55 | 0,26 | 8 | 0,05 | 0,09 | 14,5 | Lisse |
| b/0,55 | 0,20 | 8 | 0,13 | 0,24 | 14,5 | Rugueux |
| (sans produit tensio-actif) | | | | | | |
| Exemple 2 | | | | | | |
| a/1,20 | 1,8 | 8 | 0,14 | 0,12 | 6,7 | Lisse |
| b/1,20 | 1,5 | 8 | 0,30 | 0,25 | 6,7 | Rugueux |
| (sans produit tensio-actif) | | | | | | |
| Exemple 3 | | | | | | |
| a/1,6 | 2,0 | 8 | 0,24 | 0,15 | 5 | Lisse |
| b/1,6 | 1,8 | 8 | 0,42 | 0,26 | 5 | Rugueux |
| (sans produit tensio-actif | | | | | | |

était de 1,6 micron. On procède alors de façon analogue à l'exemple 2. La cuisson oxydante a été effectuée vers 1550 °C. La dimension moyenne des pores est de 2 microns avec agent tensio-actif et de 1,8 micron sans un tel agent.

Il est indiqué dans le tableau ci-contre les grosseurs moyennes de grains d'alumine $D_{50}$, le diamètre moyen des pores $\varnothing p$, le caractère lisse ou rugueux, la longueur sur laquelle on effectue l'intégration des hauteurs le long de la surface («cut-off»), la rugosité moyenne Ra, le rapport Ra/$D_{50}$, et le rapport cut-off/$D_{50}$ pour des membranes en alumine fabriqués selon les exemples 1 et 2 ci-dessus.

Les mesures de rugosité ont été effectuées à l'aide d'un rugosimètre «Surfcom-1» à enregistreur fabriqué par la société Tokyo Seimitsu Co Ltd.

**Revendications**

1. Membrane de filtration, formée d'une matière minérale frittée, comprenant au moins une couche servant de couche de filtration et constituée de grains solidarisés entre eux, caractérisée en ce qu'à la surface de ladite couche de filtration, sur une distance au moins égale à 5 fois la dimension moyenne des grains, la rugosité moyenne est inférieure à 0,20 fois la dimension moyenne des grains dans la zone considérée.

2. Membrane selon la revendication 1, caractérisée en ce que ladite rugosité moyenne est inférieure à 0,10 fois la dimension moyenne des grains.

3. Membrane selon l'une des revendications 1 et 2, caractérisée en ce que, en poids, 90% au moins des grains de cette couche superficielle ont une dimension inférieure à 2 fois la dimension moyenne, et 90%, en poids, au moins d'entre eux une dimension supérieure à la moitié de la dimension moyenne.

4. Membrane selon l'une des revendications 1 à 3, caractérisée en ce que la porosité de la couche à pores les plus fins est comprise entre 30 et 40% en volume.

5. Membrane selon l'une des revendications 1 à 4, caractérisée par le fait qu'elle comporte une couche support présentant des pores de dimensions plus importantes, la couche support étant solidarisée à la couche de filtration.

6. Membrane selon la revendication 5, caractérisée par le fait que la couche support comporte des sous-couches présentant des pores de dimension différentes.

7. Membrane selon l'une des revendications 1 à 6, caractérisée en ce qu'elle est en une matière minérale frittée du groupe comprenant les oxydes métalliques, le carbure de silicium, le nitrure de silicium, les oxynitrures de silicium et d'aluminium (SiAlON), les borures et les verres.

8. Membrane selon la revendication 7, caractérisée en ce qu'elle est en alumine de pureté au moins égale à 99,9%.

9. Procédé de fabrication d'une membrane de filtration selon la revendication 5, selon lequel on prépare une barbotine comprenant des grains fins d'une matière minérale et un produit tensio-actif, on met la barbotine en présence de la couche formant support, on évacue la barbotine en excès, on sèche la couche mince déposée, puis on soumet l'ensemble du support et de la couche mince déposée à une cuisson à une température suffisante pour fritter les grains de matière minérale, caractérisé en ce que le produit tensio-actif est choisi pour ses propriétés d'agent défloculant et en ce que la matière minérale comporte au moins une substance du groupe comprenant les oxydes métalliques le carbure de silicium, le nitrure de silicium, les oxynitrures de silicium et d'aluminium (SiAlON), les borures et les verres.

10. Procédé selon la revendication 9, caractérisé par le fait qu'après avoir mis en contact la barbotine avec la couche support, la barbotine est filtrée au travers de ladite couche support.

11. Procédé selon l'une des revendications 9 et 10, caractérisé par le fait qu'une matière organique épaississante ne s'opposant pas à la défloculation de la barbotine est ajoutée à celle-ci.

12. Procédé selon l'une des revendications 9 à 11, caractérisé par le fait qu'avant d'être mis au contact de la couche support, la barbotine est soumise à un broyage prolongé.

**Claims**

1. A filter membrane made of a sintered mineral material and comprising at least one layer serving as filter layer and being constituted by grains which are fixedly connected to one another, characterized in that on the surface of said filter layer, over a distance at least equal to 5 times the average grain size, the average roughness is lower than 0,20 times the average dimension of the grains in the considered zone.

2. A membrane according to claim 1, characterized in that said average roughness is lower than 0,10 times the average dimension of the grains.

3. A membrane according to one of claims 1 and 2, characterized in that 90% by weight at least of the grains of this superficial layer have a smaller size than twice the average size, and 90% by weight at least among them have a greater size than half of the average size.

4. A membrane according to one of claims 1 to 3, characterized in that the porosity of the layer with the finest pores is in the range 30 to 40% by volume.

5. A membrane according to one of claims 1 to 4, characterized in that it comprises a support layer presenting pores of greater dimensions, the support layer being fixedly connected to the filter layer.

6. A membrane according to claim 5, characterized in that the support layer comprises sub-layers with pores of different diameters.

7. A membrane according to one of claims 1 to 6, characterized in that it is made of a sintered material selected from the group comprising the metal oxides, silicon carbide, silicon nitride, sili-

con and aluminium oxynitrides (SiAlON), borides and glasses.

8. A membrane according to claim 7, characterized in that it is made of alumina of a purity of at least 99,9%.

9. A method of manufacturing a filter membrane according to claim 5, according to which a slip comprising fine grains of a mineral material and a tensio-active product is prepared, the slip is brought into contact with the layer forming support, the superfluous slip is evacuated, the deposited thin layer is dried, then the unit of support and thin layer is submitted to a heating up to a temperature which is sufficient for getting the grains of mineral material sintered, characterized in that the tensio-active product is chosen for its defloculating properties, and in that the mineral material comprises at least one substance of the group comprising the metal oxides, silicon carbide, silicon nitride, silicon and aluminium oxynitrides (SiAlON), borides and glasses.

10. A method according to claim 9, characterized in that after having brought the slip into contact with the support layer, the slip is filtered through said support layer.

11. A method according to one of claims 9 and 10, characterized in that a thickening organic material not hindering the defloculation of the slip is added to the latter.

12. A method according to one of claims 9 to 11, characterized in that before being brought into contact with the support layer, the slip is subjected to prolonged grinding.


**Patentansprüche**

1. Filtermembran aus einem gesinterten mineralischen Material, mit mindestens einer Schicht, die als Filterschicht dient und aus untereinander verbundenen Körnchen besteht, dadurch gekennzeichnet, dass an der Oberfläche der genannten Filterschicht über eine Strecke von mindestens fünfmal der mittleren Körnchengrösse die mittlere Rauhigkeit geringer ist als 0,20mal die mittlere Körnchengrösse in dem betrachteten Bereich.

2. Membran nach Anspruch 1, dadurch gekennzeichnet, dass die mittlere Rauhigkeit geringer ist als 0,10mal die mittlere Körnchengrösse.

3. Membran nach einem der Ansprüche 1 und 2, dadurch gekennzeichnet, dass mindestens 90 Gew.% der Körnchen dieser Oberflächenschicht eine Grösse haben, die geringer ist als 2mal die mittlere Grösse, und mindestens 90 Gew.% von ihnen eine Grösse, die grösser ist als die Hälfte der mittleren Grösse.

4. Membran nach einem der Ansprüche 1 bis 3, dadurch gekennzeichnet, dass die Porosität der Schicht mit den feinsten Poren zwischen 30 und 40 Volumenprozent liegt.

5. Membran nach einem der Ansprüche 1 bis 4, dadurch gekennzeichnet, dass sie eine Trägerschicht aufweist, die Poren von grösseren Abmessungen aufweist, wobei die Trägerschicht mit der Filterschicht fest verbunden ist.

6. Membran nach Anspruch 5, dadurch gekennzeichnet, dass die Trägerschicht Unterschichten mit unterschiedlichen Porengrössen aufweist.

7. Membran nach Anspruch 5, dadurch gekennzeichnet, dass sie aus einem gesinterten mineralischen Material der Gruppe besteht, die von den Metalloxiden, Siliciumkarbid, Siliciumnitrid, Silizium und Aluminiumoxynitrid (SiAlON), den Boriden und den Gläsern gebildet wird.

8. Membran nach Anspruch 7, dadurch gekennzeichnet, dass sie aus einem Aluminiumoxid einer Reinheit von mindestens 99,9% ist.

9. Verfahren zur Herstellung einer Filtermembran nach Anspruch 5, gemäss dem man eine Schlämmung herstellt, die feine Körnchen eines mineralischen Materials und ein tensio-aktives Produkt enthält, dass man die Schlämmung mit der den Träger bildenden Schicht in Verbindung bringt, den überflüssigen Schlamm entfernt, die aufgebrachte dünne Schicht trocknet, und dann das aus dem Träger und der aufgebrachten dünnen Schicht gebildete Ganze einer Erwärmung auf eine Temperatur unterwirft, die ausreicht, um Körner aus mineralischen Material zu sintern, dadurch gekennzeichnet, dass das tensio-aktive Produkt aufgrund seiner Entflockungs-Eigenschaften ausgewählt wird und dass das mineralische Material mindestens eine Substanz der Gruppe aufweist, die von den Metalloxiden, dem Siliziumkarbid, dem Siliziumnitrid, den Silizium und Aluminiumoxynitriden (SiAlON), den Boriden und den Gläsern gebildet wird.

10. Verfahren nach Anspruch 9, dadurch gekennzeichnet, dass nach dem Zusammenbringen von Schlämmung und Trägerschicht die Schlämmung durch die Trägerschicht hindurch gefiltert wird.

11. Verfahren nach einem der Ansprüche 9 und 10, dadurch gekennzeichnet, dass ein verdickendes organisches Material, das sich der Entflockung der Schlämmung nicht widersetzt, dieser zugesetzt wird.

12. Verfahren nach einem der Ansprüche 9 bis 11, dadurch gekennzeichnet, dass die Schlämmung von dem Zusammenbringen mit der Trägerschicht einem ausgedehnten Zerkleinerungsprozess unterzogen wird.